# EUROPÄISCHE PATENTANMELDUNG

(11) **EP 2 320 005 A2**
(43) Veröffentlichungstag der Anmeldung: **11.05.2011**
(21) Anmeldenummer: 10450157.2
(22) Anmeldetag: 21.10.2010
(51) Int. Cl.: E04F 13/08, F16L 3/12, F16L 3/13, F16L 3/24, H02G 3/32

(54) **Verfahren und System zum Festlegen eines Befestigungselements**

(30) Priorität: 28.10.2009 AT 6742009
(71) Anmelder: Schnabl Stecktechnik GmbH, 3100 St. Pölten (AT)
(72) Erfinder: Bruckbauer Wolfgang, 4893 Zell am Moos (AT); Neumayer Johann, 3100 St. Pölten (AT)
(74) Vertreter: Miksovsky, Alexander

(57) **Zusammenfassung**

Bei einem System und Verfahren zum Festlegen eines Befestigungselements für einen an einem mit einer Dämmschicht (2) versehenen Wandelement (1) anzuordnenden bzw. festzulegenden Gegenstand sind folgende Elemente vorgesehen:
- ein stab- bzw. stangenartiges Verankerungselement (4), welches in ein Loch (3) einbringbar ist, welches die Dämmschicht (2) durchdringt und in das Wandelement (1) reicht, wobei das Verankerungselement (4) eine Länge zumindest entsprechend der Tiefe des Lochs (3) aufweist, und
- ein das Verankerungselement (4) übergreifendes, an diesem verriegelbares und an der Außenseite der Wand bzw. Dämmschicht (2) insbesondere in Anlage an dieselbe bringbares Abschlußelement (8),

wobei an dem Verankerungselement (4) und/oder Abschlußelement (8) ein Befestigungselement (13, 16) zur Festlegung des Gegenstands anordenbar bzw. festlegbar ist.

Derart wird eine einfache und zuverlässige Festlegung eines Gegenstands an einem Wandelement (1) mit einer gegebenenfalls eine große Dicke aufweisenden Dämmschicht (2) zur Verfügung gestellt.

## Beschreibung

Die vorliegende Erfindung bezieht sich auf ein Verfahren zum Festlegen eines Befestigungselements für einen an einem mit einer Dämmschicht versehenen Wandelement anzuordnenden bzw. festzulegenden Gegenstand, wobei ein Loch gebildet wird, welches die Dämmschicht durchdringt und in das Wandelement reicht. Die vorliegende Erfindung bezieht sich darüber hinaus auf ein System zum Festlegen eines Befestigungselements für einen an einem mit einer Dämmschicht versehenen Wandelement anzuordnenden bzw. festzulegenden Gegenstand.

Im Zusammenhang mit der Festlegung bzw. Anordnung eines Gegenstands an einem mit einer Dämmschicht versehenen Wandelement ist es bekannt, eine Bohrung bzw. ein Loch sowohl durch die Dämmschicht als auch in das Wandelement bzw. das das Wandelement bildende Material auszubilden, worauf beispielsweise nach Einbringung eines Dübels oder dgl. in das Loch eine Festlegung eines Befestigungselements oder gegebenenfalls einer Halterung für den anzuordnenden bzw. festzulegenden Gegenstand unter Verwendung einer Schraube erfolgt, welche in dem Dübel oder einem ähnlichen Aufnahmeelement verschraubt wird. Insbesondere unter Berücksichtigung der üblicherweise geringen Festigkeit bzw. Tragfähigkeit einer derartigen Dämmschicht müssen sich sowohl der Dübel bzw. das Aufnahmeelement als auch die Schraube über eine entsprechende Länge in das Wandelement bzw. das eine entsprechend höhere Festigkeit und Tragfähigkeit aufweisende Material desselben erstrecken, um darin sicher verankert zu sein bzw. zu werden.

Mit zunehmender Stärke bzw. Dicke derartiger Dämmschichten, welche zwischenzeitlich beispielsweise Dicken von 15 bis 20 cm und darüber insbesondere zur Erzielung einer entsprechenden Wärmedämmung von Gebäudehüllen und Geschoßdecken erreichen, wird insbesondere die Festlegung von gegebenenfalls ein geringes Gewicht aufweisenden Gegenständen schwierig bzw. kostspielig, weil für derartige Längen von zu durchdringenden Dämmschichten üblicherweise Schrauben mit vergleichsweise großem Durchmesser zur Anwendung gelangen müssen. Darüber hinaus ist eine Verankerung mittels derartiger Schrauben großer Länge und mit entsprechendem großem Durchmesser überaus kostenintensiv und kann beispielsweise für eine Festlegung von leichten Gegenständen, wie beispielsweise Lampen oder Halterungen für Rohre oder Leitungen nicht wirtschaftlich sinnvoll zum Einsatz gelangen.

Die vorliegende Erfindung zielt daher darauf ab, insbesondere unter Verzicht auf derart kostspielige Festlegungselemente, wie beispielsweise Schrauben mit überaus großer Länge und vergleichsweise großem Durchmesser, sowohl ein Verfahren als auch ein System zur Festlegung eines Befestigungselements der eingangs genannten Art zur Verfügung zu stellen, wobei es mit einfach und kostengünstig herzustellenden Bauteilen gelingt, eine entsprechend zuverlässige Festlegung eines Befestigungselements für einen Gegenstand selbst bei Vorsehen von großen Dicken von insbesondere eine geringe Tragfähigkeit bzw. Festigkeit aufweisenden Dämmschichten auf einem Wandelement zur Verfügung zu stellen.

Zur Lösung dieser Aufgaben ist ein Verfahren der eingangs genannten Art im wesentlichen gekennzeichnet durch folgende Schritte:
- Einbringen eines stab- bzw. stangenförmigen Verankerungselements in das Loch, wobei das Verankerungselement eine Länge zumindest entsprechend der Tiefe des Lochs aufweist,
- Verankern des Verankerungselements in dem im Wandelement befindlichen Teilbereich des Lochs,
- Anordnen eines das Verankerungselement übergreifenden, an diesem verriegelbaren und an der Außenseite der Wand bzw. Dämmschicht insbesondere in Anlage bringbaren Abschlußelements,
- gegebenenfalls Ablängen eines aus dem Loch vorragenden Teilbereichs des Verankerungselements, und
- Festlegen des Befestigungselements an dem Verankerungselement und/oder Abschlußelement zur Festlegung des Gegenstands.

Dadurch, daß erfindungsgemäß ein stab- bzw. stangenförmiges Verankerungselement zur Verfügung gestellt und in das die Dämmschicht durchdringende und in das Wandelement bzw. das Material desselben reichende Loch entsprechender Länge eingebracht wird, wird sichergestellt, daß trotz einer gegebenenfalls großen Dicke der Dämmschicht eine sichere Verankerung in dem Wandelement bzw. dem eine entsprechend erhöhte Festigkeit bzw. Tragfähigkeit aufweisenden Material desselben vorgesehen bzw. zur Verfügung gestellt wird. Die Verankerung des Verankerungselements im Wandelement kann unter Einsatz von bekannten Verankerungstechniken, wie sie oben erwähnt wurden, vorgenommen werden. Für die nachfolgende Anordnung bzw. Festlegung eines Befestigungselements sowie dem daran festzulegenden Gegenstand wird erfindungsgemäß vorgesehen, ein Abschlußelement zur Verfügung zu stellen, welches das Verankerungselement übergreift und insbesondere in Anlage an die Dämmschicht bringbar ist. Durch ein gegebenenfalls erforderliches Ablängen des in das Loch eingebrachten Verankerungselements läßt sich in Anpassung an gegebenenfalls unterschiedliche Dämmschichten mit einer Ausführungsform oder einer überaus geringen Anzahl von unterschiedliche Abmessungen, insbesondere unterschiedliche Länge aufweisenden Verankerungselementen für verschiedene Einsatzzwecke das Auslangen finden, wobei durch das erfindungsgemäß vorgeschlagene, gegebenenfalls erforderliche Ablängen ein im wesentlichen bündiger Abschluß des Verankerungselements sowohl in Anpassung an die Dicke der Dämmschicht als auch an die Tiefe eines Eindringens in das Loch in dem Wandelement bzw. dem Material desselben möglich wird. Nach einem derartigen Festlegen bzw. Anordnen des Abschlußelements als auch einem gegebenenfalls erforderlichen Ablängen des Verankerungselements erfolgt ein Festlegen des Befestigungselements an dem Verankerungselement und/oder Abschlußelement für eine in weiterer Folge vorzunehmende Festlegung bzw. Anordnung des Gegenstands. Es kann somit mit einem kostengünstig herstellbaren stab- bzw. stangenförmigen Verankerungselement, welches in dem gegebenenfalls eine große Tiefe aufweisenden Loch sicher verankerbar ist, das Auslangen gefunden werden, wobei das für eine ordnungsgemäße Anordnung bzw. Festlegung des anzuordnenden Gegenstands zusätzlich erforderliche Befestigungselement sicher an dem Abschlußelement oder unmittelbar an dem Verankerungselement festlegbar ist. Es kann somit auf den Einsatz von gegebenenfalls eine große Länge und dadurch bedingt einen vergleichsweise großen Durchmesser aufweisenden Schrauben und entsprechend lange Dübel bzw. Aufnahmevorrichtungen verzichtet werden, so daß insbesondere auch gegebenenfalls ein geringes Gewicht aufweisende Gegenstände sicher und zuverlässig und insbesondere mit kostengünstigen Bauteilen an einem gegebenenfalls mit einer vergleichsweise dicken Dämmschicht versehenen Wandelement festgelegt werden können.

Für eine rasche und zuverlässige Festlegung des Abschlußelements an dem Verankerungselement wird gemäß einer bevorzugten Ausführungsform vorgeschlagen, daß das Abschlußelement über eine Verrastung zueinander komplementärer Profilierungen an der Außenseite des Verankerungselements und an dem das Verankerungselement übergreifenden Teilbereich des Abschlußelements festgelegt bzw. verriegelt wird. Derartige komplementäre Profilierungen zur Ausbildung einer Verrastung können von einer einfachen Verzahnung oder dgl. an der Außenseite des Verankerungselements als auch in einer entsprechenden Durchbrechung bzw. Öffnung des Abschlußelements für ein Übergreifen des aus dem Loch vorragenden Teilbereichs des Verankerungselements in einfacher Weise angebracht bzw. ausgebildet werden und stellen eine sichere und rasche Verriegelung zur Verfügung.

Für eine sichere Verankerung des Verankerungselements in dem gegebenenfalls eine große Länge aufweisenden Loch wird gemäß einer weiters bevorzugten Ausführungsform vorgeschlagen, daß das Verankerungselement gegen ein Verdrehen in dem Loch gesichert wird.

In ähnlicher Weise wird für eine zuverlässige Verankerung des Abschlußelements insbesondere bei bzw. nach einem Festlegen eines Befestigungselements für einen nachfolgend daran festzulegenden Gegenstand darüber hinaus vorgesehen, daß das Abschlußelement gegenüber einem Verdrehen in dem Loch gesichert wird, wie dies einer weiters bevorzugten Ausführungsform des erfindungsgemäßen Verfahrens entspricht.

Für eine einfache und zuverlässige Festlegung des Befestigungselements wird gemäß einer weiters bevorzugten Ausführungsform vorgeschlagen, daß die Festlegung des Befestigungselements durch ein Verriegeln von zueinander komplementären Profilierungen an der von der Wandoberfläche abgewandten Seite bzw. Oberfläche des Abschlußelements und an einer zu dem Abschlußelement gerichteten Seite bzw. Oberfläche des Befestigungselements vorgenommen wird. Derart kann beispielsweise das Abschlußelement an seiner von der Dämmschicht abgewandten Oberfläche mit wenigstens einer normierten bzw. standardisierten Profilierung versehen sein, welche mit einer entsprechenden Profilierung eines Befestigungselements, beispielsweise einer Rohrschelle oder dgl. in einfacher Weise zusammenwirkt und daran festlegbar, beispielweise verrastbar ist.

Für eine überaus einfache und sichere Festlegung wird gemäß einer weiters bevorzugten Ausführungsform vorgeschlagen, daß das Befestigungselement von einer in eine insbesondere mittig verlaufende Ausnehmung des Verankerungselements einbringbaren Schraube zur Festlegung des Gegenstands gebildet wird. Derart kann beispielsweise auch mit einer eine geringe Länge und einen geringen Durchmesser aufweisenden und derart kostengünstig bereitzustellenden Schraube das Auslangen für eine Festlegung eines Gegenstands gefunden werden, während nicht, wie dies im Stand der Technik der Fall war, sichergestellt werden muß, daß selbst bei einer eine große Dicke aufweisenden Dämmschicht die Schraube für eine Verankerung in das Material des Wandelements eintritt. Zur Lösung der oben genannten Aufgaben ist darüber hinaus ein System der eingangs genannten Art im wesentlichen gekennzeichnet durch:
- ein stab- bzw. stangenartiges Verankerungselement, welches in ein Loch einbringbar ist, welches die Dämmschicht durchdringt und in das Wandelement reicht, wobei das Verankerungselement eine Länge zumindest entsprechend der Tiefe des Lochs aufweist, und
- ein das Verankerungselement übergreifendes, an diesem verriegelbares und an der Außenseite der Wand bzw. Dämmschicht insbesondere in Anlage an dieselbe bringbares Abschlußelement,
wobei an dem Verankerungselement und/oder Abschlußelement ein Befestigungselement zur Festlegung des Gegenstands anordenbar bzw. festlegbar ist.

Wie bereits oben im Zusammenhang mit dem erfindungsgemäßen Verfahren ausgeführt, gelingt es somit durch Bereitstellung eines einfachen und einfach und kostengünstig herstellbaren stab- bzw. stangenartigen Verankerungselements, daß nach einer sicheren Festlegung in einem auch eine gegebenenfalls große Dicke einer Dämmschicht durchdringenden Loch über das am Verankerungselement anzuordnende bzw. festzulegende Abschlußelement eine sichere Anordnung bzw. Festlegung eines Befestigungselements für den insgesamt an dem Wandelement anzuordnenden Gegenstand zur Verfügung gestellt wird.

Für eine besonders einfache und zuverlässige Festlegung des Abschlußelements wird gemäß einer bevorzugten Ausführungsform vorgeschlagen, daß das Verankerungselement an seinem aus dem Loch ragenden Ende mit einer Profilierung versehen ist, welche mit einer komplementären Profilierung an dem das Verankerungselement übergreifenden Teilbereich des Abschlußelements für ein Verrasten bzw. Festlegen des Abschlußelements an dem Verankerungselement zusammenwirkt. Wie bereits oben erwähnt, können derartige Profilierungen für eine Verrastung entsprechend einfach und zuverlässig bereitgestellt werden und darüber hinaus eine entsprechend zuverlässige Festlegung ermöglichen.

Für eine Anpassung an unterschiedliche Längen bzw. Tiefen eines Lochs, welche beispielsweise durch unterschiedliche Dicken einer Dämmschicht bewirkt sind, wird gemäß einer weiters bevorzugten Ausführungsform vorgeschlagen, daß das Verankerungselement ablängbar bzw. mit Sollbruchstellen ausgebildet ist.

Zur Bereitstellung einer Verdrehsicherung des erfindungsgemäßen Systems und insbesondere des Verankerungselements in dem gegebenenfalls eine große Länge aufweisenden Loch wird darüber hinaus vorgeschlagen, daß das Verankerungselement mit rippen- bzw. finnenartigen Erhebungen insbesondere in dem die Dämmschicht durchdringenden Teilbereich ausgebildet ist, wie dies einer weiters bevorzugten Ausführungsform des erfindungsgemäßen Systems entspricht.

Zur Erzielung einer entsprechenden Verdrehsicherung bei Einsatz von einfach und kostengünstig herstellbaren Elementen wird gemäß einer weiters bevorzugten Ausführungsform vorgeschlagen, daß sich die rippenartigen Erhebungen im wesentlichen in Längsrichtung des Verankerungselements erstrecken.

Für eine insbesondere gleichmäßige Verteilung von auf das erfindungsgemäße System und insbesondere auf das in dem Loch großer Länge angeordnete Verankerungselement einwirkenden Kräften bzw. Belastungen wird darüber hinaus vorgeschlagen, daß wenigstens zwei, insbesondere vier Erhebungen im wesentlichen gleichmäßig über den Umfang des Verankerungselements verteilt vorgesehen sind, wie dies einer weiters bevorzugten Ausführungsform des erfindungsgemäßen Systems entspricht.

Für eine Verdrehsicherung des Abschlußelements wird darüber hinaus gemäß einer weiters bevorzugten Ausführungsform vorgeschlagen, daß das Abschlußelement an seiner zur Dämmschicht gewandten Oberfläche mit wenigstens einer Erhebung zur Ausbildung einer Verdrehsicherung ausgebildet ist.

Zur sicheren und zuverlässigen Verankerung des Verankerungselements in dem Wandelement und insbesondere ohne Bereitstellung von zusätzlichen Aufnahmeelementen, wie beispielsweise Dübeln, wird gemäß einer weiters bevorzugten Ausführungsform vorgeschlagen, daß das Verankerungselement an dem zur Wand gewandten, innenliegenden Ende in an sich bekannter Weise an seinem Außenumfang Spreizkörper für ein im wesentlichen selbsttätiges Verankern des Verankerungselements in dem Loch in dem Wandelement aufweist. Durch derartige Spreizkörper läßt sich ein selbsttätiges Verankern des Verankerungselements in einem Loch in dem Wandelement bzw. dem eine entsprechende Festigkeit und Tragfähigkeit aufweisenden Material desselben insbesondere ohne Zuhilfenahme von weiteren Aufnahmeelementen, wie beispielsweise Dübeln, zur Verfügung stellen. Derart gelingt durch Einbringung bzw. Einsetzung des Verankerungselements mit den an zum Wandelement gerichteten Ende vorgesehenen Spreizkörpern unmittelbar und in einem gemeinsamen bzw. einzigen Arbeitsgang auch eine Verankerung des Verankerungselements in dem Loch.

Für eine einfache Festlegung eines Befestigungselements an dem Abschlußelement ist gemäß einer weiters bevorzugten Ausführungsform vorgesehen, daß das Abschlußelement an der von der Dämmschicht abgewandten Oberfläche mit wenigstens einer Profilierung ausgebildet ist, welche mit einer komplementären Profilierung des Befestigungselements zusammenwirkt. Derart kann mit entsprechend geringem Arbeitsaufwand unmittelbar eine Festlegung des Befestigungselements oder beispielsweise einer Halterung vorgenommen werden, wobei in diesem Zusammenhang gemäß einer weiters bevorzugten Ausführungsform vorgeschlagen wird, daß das Befestigungselement von einer Halterung bzw. einem Aufnahmeelement einer Halterung für einen insbesondere rohrförmigen Gegenstand gebildet ist. Bei Ausbilden des Abschlußelements mit beispielsweise wenigstens einer standardisierten Profilierung kann somit eine einfache Festlegung beispielweise von Halterungen oder Schellen für Rohrleitungen zur Verlegung von Installationen selbst bei Anwendung von eine große Dicke aufweisenden Dämmschichten in einfacher und kostengünstiger sowie zuverlässiger Weise vorgenommen werden.

Wie oben bereits erwähnt, kann darüber hinaus unter Einsatz eines einfachen Befestigungselements im wesentlichen unmittelbar eine Festlegung des Gegenstands vorgenommen werden, wobei in diesem Zusammenhang gemäß einer weiters bevorzugten Ausführungsform vorgeschlagen wird, daß das Abschlußelement und/oder Verankerungselement wenigstens eine Durchbrechung bzw. Öffnung zur Aufnahme wenigstens eines schrauben- bzw. bolzenartigen Befestigungselements zur Festlegung eines Gegenstands aufweist bzw. aufweisen. Derartig kann selbst bei Löchern mit großer Tiefe, welche insbesondere durch eine gegebenenfalls große Dicke einer Dämmschicht bewirkt wird, sichergestellt werden, daß mit eine entsprechende bzw. vergleichsweise geringere Länge aufweisenden Schrauben entsprechend geringeren Durchmessers, welche derart kostengünstig zur Verfügung gestellt werden können, das Auslangen gefunden werden kann.

Für eine besonders einfache und zuverlässige Herstellung der Bestandteile des erfindungsgemäßen Systems wird gemäß einer weiters bevorzugten Ausführungsform vorgeschlagen, daß das Verankerungselement und/oder das Abschlußelement aus einem Kunststoff, insbesondere durch Spritzgießen, hergestellt ist bzw. sind.

Die Erfindung wird nachfolgend anhand von in der beiliegenden Zeichnung schematisch dargestellten Ausführungsbeispielen näher erörtert. In dieser zeigen:
Fig. 1 eine schematische Seitenansicht auf eine erste Ausführungsform eines erfindungsgemäßen Systems zur Durchführung des erfindungsgemäßen Verfahrens;
Fig. 2 eine Seitenansicht ähnlich zu Fig. 1, wobei das Verankerungselement sowie das Abschlußelement um 90° gedreht dargestellt sind;
Fig. 3 eine schematische perspektivische Ansicht des in

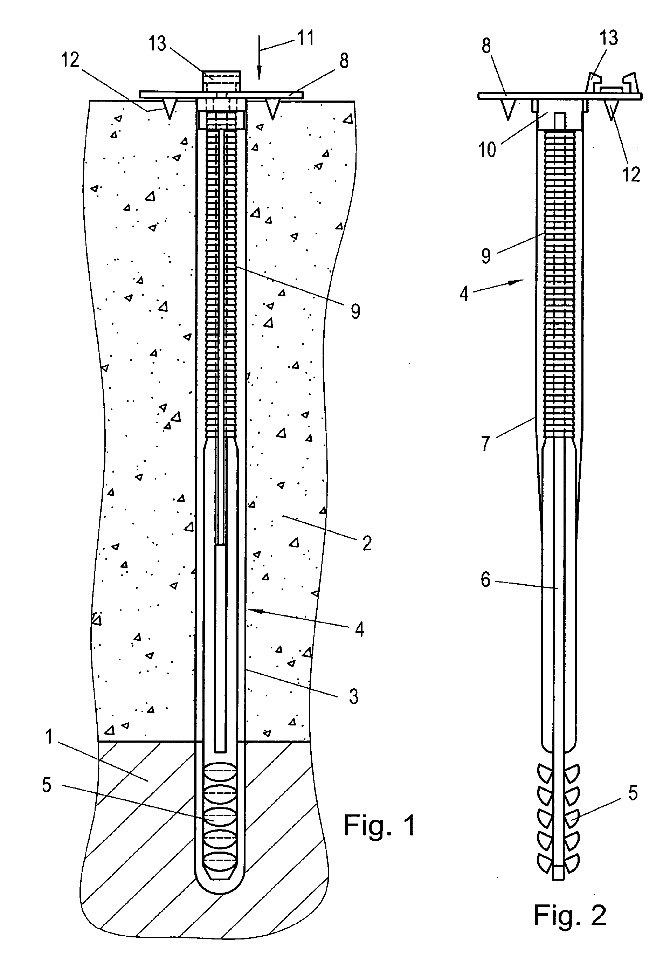

Fig. 1 und 2 dargestellten erfindungsgemäßen Systems;

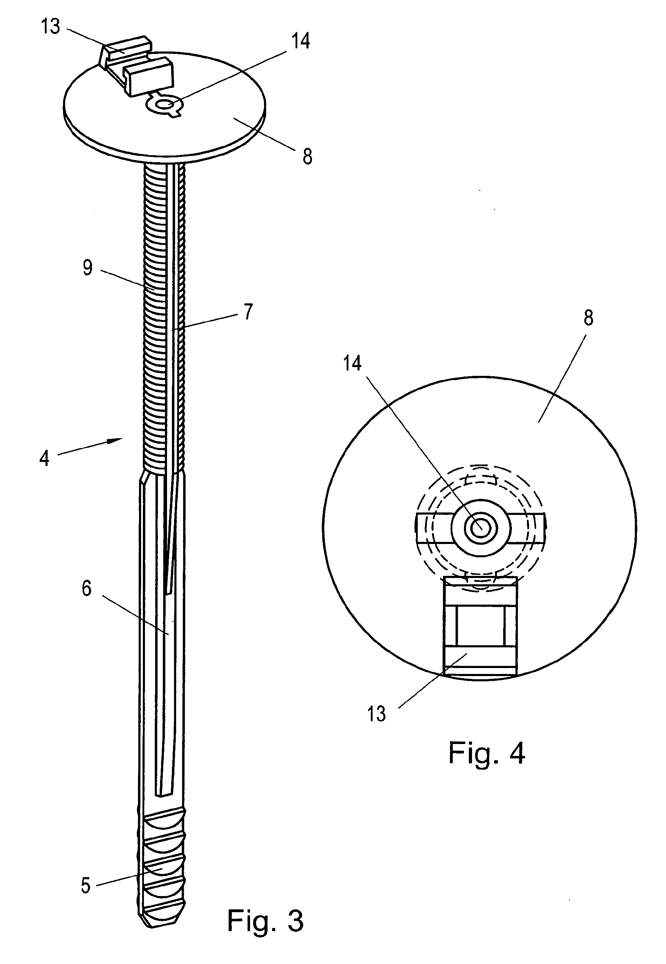

Fig. 4 eine schematische Draufsicht auf das Abschlußelement der in Fig. 1 bis 3 dargestellten Ausführungsform;

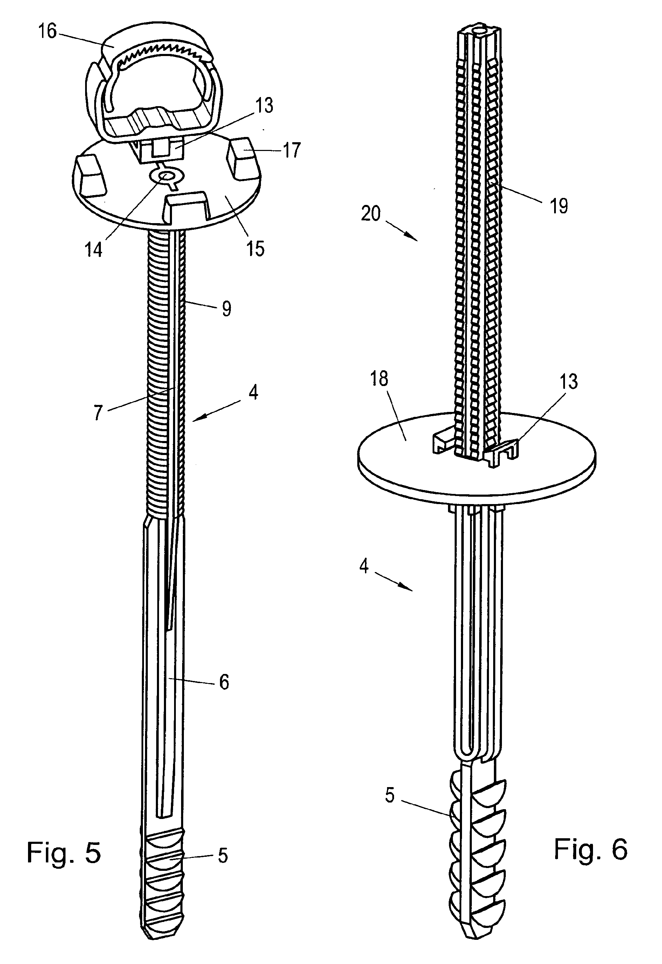

Fig. 5 in einer zu Fig. 3 ähnlichen Darstellung eine schematische perspektivische Ansicht einer abgewandelten Ausführungsform eines erfindungsgemäßen Systems, wobei neben einer abgewandelten Ausführung des Abschlußsystems auch schematisch eine Halterung für eine Aufnahme eines rohrartigen Gegenstands angedeutet ist; und
Fig. 6 in einer zu Fig. 3 bzw. 5 wiederum ähnlichen Darstellung eine schematische Ansicht einer weiteren abgewandelten Ausführungsform eines erfindungsgemäßen Systems, wobei insbesondere ersichtlich ist, daß nach einer Verankerung an einem nicht näher dargestellten Wandelement ein über das Abschlußelement vorragender Teilbereich des Verankerungselements abgelängt bzw. entfernt werden wird.

Bei der in Fig. 1 bis Fig. 4 dargestellten Ausführungsform ist lediglich in der Darstellung gemäß Fig. 1 ein Wandelement 1 angedeutet, welches mit einer eine vergleichsweise große Dicke ausgebildeten Dämmschicht 2 versehen ist, wobei ein Loch bzw. eine Bohrung 3 die Dämmschicht 2 durchdringt und in das Wandelement 1 reicht, welches aus einem Material entsprechend größerer Festigkeit bzw. Tragfähigkeit ausgebildet ist.

In ein derartiges Loch 3 wird ein stab- bzw. stangenartiges Verankerungselement 4 eingebracht, welches in Fig. 1 bis 3 in unterschiedlicher Ansicht dargestellt ist. Für eine Verankerung des Verankerungselements 4 in dem Loch bzw. in der Bohrung 3 weist das Verankerungselement 4 an seinem zum Wandelement 1 gerichteten Ende eine Vielzahl von Spreizkörpern 5 auf, über welche unmittelbar eine im wesentlichen selbsttätige Verankerung des Verankerungselements 4 in dem Loch 3 bei einem Eintritt bis zu einer Tiefe entsprechend dem Wandelement 1 erzielbar ist.

Darüber hinaus ist für eine Verdrehsicherung das stab- bzw. stangenartige Verankerungselement 4 mit einer Mehrzahl von Rippen bzw. finnenartigen Erhebungen 6 und 7 ausgebildet, welche nicht nur über den Umfang verteilt angeordnet sind, sondern sich auch in unterschiedlichen Längsbereichen des stab- bzw. stangenartigen Verankerungselements 4 erstrecken.

Für eine einfache und sichere Festlegung eines scheiben- bzw. tellerartig dargestellten Abschlußelements 8 an dem Verankerungselement 4 ist das Verankerungselement 4 an seinem aus der Dämmschicht vorragenden Teilbereich mit einer Profilierung 9 in Form einer Verzahnung ausgebildet. Über die Verzahnung 9 und eine entsprechende komplementäre zahnartige Profilierung in dem das Verankerungselement 4 übergreifenden Teilbereich 10 des Abschlußelements 8 ist unmittelbar eine Verrastung und Festlegung des Abschlußelements 8 durch ein Aufschieben desselben auf das Verankerungselement 4 entsprechend dem Pfeil 11 erzielbar.

Für eine zusätzliche Verdrehsicherung des Abschlußelements 8 weist dieses eine Mehrzahl von Erhebungen bzw. Vorsprüngen 12 auf, welche bei einer Anlage des Abschlußelements 8 an der Dämmschicht 2 wenigstens teilweise in diese eindringen.

Darüber hinaus ist aus den Darstellungen gemäß Fig. 1 bis 4 ersichtlich, daß das Abschlußelement 8 mit einer Profilierung 13 an der von der Dämmschicht 2 abgewandten Oberfläche bzw. Seite des Abschlußelements 8 versehen ist, wobei an dieser zusätzlichen Profilierung 13 beispielsweise eine Halterung festlegbar ist, wie dies bei der Ausführungsform gemäß Fig. 5 im Detail dargestellt ist.

Anstelle einer derartigen zusätzlichen Profilierung 13 zur einfachen Aufnahme einer Halterung kann das Abschlußelement 8 beispielsweise auch im wesentlichen eben bzw. flächig unter Weglassung einer derartigen Profilierung ausgebildet sein. In diesem Fall kann eine einfache und zuverlässige Festlegung eines nicht näher dargestellten Gegenstands beispielsweise durch ein unmittelbares Einbringen einer Schraube in ein im wesentlichen mittiges Loch 14 des aus dem Loch 3 der Dämmschicht 2 ragenden Endbereichs des Verankerungselements 4 vorgenommen werden.

Aus der Darstellung gemäß Fig. 1 bis 4 ist ersichtlich, daß insbesondere anstelle einer eine überaus große Länge aufweisenden Schraube, welche bei Vorsehen bzw. Verwendung einer eine große Dicke aufweisenden Dämmschicht 2 bis in das Wandelement 1 reicht, mit einem einfachen, in ein derartiges Loch 3 großer Länge bzw. Tiefe einbringbaren stab- bzw. stangenförmigen Verankerungselement 4 das Auslangen gefunden werden kann, an welchem das Abschlußelement 8 in einfacher Weise festlegbar, insbesondere verrastbar ist.

Entsprechend insbesondere der Dicke der Dämmschicht 2 sowie der Tiefe des in das Wandelement 1 eindringenden Lochs 3 wird ein gegebenenfalls über das Abschlußelement 8 vorragender Teilbereich des Verankerungselements 4 abgelängt bzw. entfernt, wie dies nachfolgend beispielsweise anhand der Darstellung gemäß Fig. 6 erörtert werden wird.

In Fig. 5 ist eine abgewandelte Ausführungsform schematisch dargestellt, wobei an einem wiederum mit 4 bezeichneten stab- bzw. stangenförmigen Verankerungselement über die Profilierung bzw. Verrastung 9 ein Abschlußelement 15 festlegbar ist. Das in Fig. 5 dargestellte Abschlußelement 15 weist neben einer wiederum mit 13 bezeichneten Profilierung zur Aufnahme bzw. Festlegung eines Befestigungselements 16 beispielsweise in Form einer Schelle über eine komplementäre Profilierung zusätzliche Erhebungen bzw. Abstützelemente 17 auf.

Für eine Verdrehsicherung des Verankerungselements 4 sind beispielsweise wiederum mit 6 und 7 bezeichnete steg- bzw. rippenartige Erhebungen vorgesehen, welche im wesentlichen in Längsrichtung des Verankerungselements 4 verlaufen.

In Fig. 6 ist eine weitere abgewandelte Ausführungsform dargestellt, wobei an einem wiederum mit 4 bezeichneten stab- bzw. stangenförmigen Verankerungselement, welches im Gegensatz zu den vorangehenden Ausführungsformen einen im wesentlichen rechteckigen bzw. quadratischen Querschnitt aufweist, ein Abschlußelement 18 über eine Profilierung bzw. Verzahnung 19 und eine entsprechende komplementäre Profilierung im Bereich der Durchtrittsöffnung des Abschlußelements 18 festlegbar ist.

Bei der Darstellung gemäß Fig. 6 ist ersichtlich, daß beispielsweise bei einer geringeren Dicke einer nicht näher dargestellten Dämmschicht 2 ein Teilbereich des Verankerungselements 4 über das Abschlußelement 18 vorragt. Dieser schematisch mit 20 bezeichnete Teilbereich wird nach einer endgültigen Festlegung bzw. Anordnung des Abschlußelements 4 mit einem einfachen Werkzeug, beispielsweise einer Zange entfernt. Alternativ können insbesondere in gleichmäßigen Abständen nicht näher dargestellte Sollbruchstellen vorgesehen sein, um ein entsprechend einfaches Ablängen bzw. Anpassen der Länge des Verankerungselements 4 an unterschiedliche Einsatzbedingungen zu ermöglichen.

Darüber hinaus ist im Gegensatz zu einer im wesentlichen außermittigen Anordnung einer Profilierung 13 zur Aufnahme einer Halterung entsprechend den vorangehenden Ausführungsformen eine derartige Profilierung 13 im wesentlichen mittig bzw. zentral an dem Abschlußelement 18 angedeutet, wobei an der Profilierung 13 nach einer Entfernung des vorragenden Teilbereichs 20 beispielsweise wiederum eine Halterung 16 in Form einer Schelle festlegbar ist.

Für eine besonders kostengünstige und einfache Herstellung wird eine Ausbildung des stab- bzw. stangenartigen Verankerungselements 4 als auch der Abschlußelemente 8, 15 bzw. 18 aus einem Kunststoffmaterial, beispielsweise durch Spritzgießen, vorgeschlagen.

Durch die Möglichkeit eines Ablängens des stabartigen Verankerungselements 4 kann darüber hinaus mit einer entsprechend geringen Anzahl von unterschiedlichen Ausführungsformen bzw. insbesondere Längen eines derartigen Verankerungselements 4 für unterschiedliche Einsatzzwecke, insbesondere unterschiedliche Dicken von Dämmschichten 2 und somit Tiefen von Bohrungen bzw. Löchern 3 das Auslangen gefunden werden. Darüber hinaus kann durch eine entsprechende Abstimmung der Profilierungen 9 am Verankerungselement 4 sowie am Abschlußelement jeweils ein Verankerungselement 4 mit unterschiedlichen Ausbildungen von Verankerungselementen 8, 15 bzw. 18 kombiniert werden.

Neben der Darstellung einer Profilierung 13 beispielsweise zur Aufnahme einer Halterung bzw. Schelle können selbstverständlich andere bzw. abgewandelte Aufnahmevorrichtungen bzw. Profilierungen für ein Zusammenwirken mit gegebenenfalls standardisierten Halterungen an dem Abschlußelement 8, 15 bzw. 18 vorgesehen sein.

Die dargestellte, im wesentlichen vertikale Anordnung des aus dem Verankerungselement 4 und einem Abschlußelement 8, 15 bzw. 18 gebildeten Systems stellt weiters keine Beschränkung im Hinblick auf die Anordnung desselben dar, so daß ein derartiges System auch beispielsweise im wesentlichen horizontal oder insbesondere weitgehend vertikal abgehängt von einer Decke zum Einsatz gelangen kann.

## Patentansprüche

**1.** Verfahren zum Festlegen eines Befestigungselements (16) für einen an einem mit einer Dämmschicht versehenen Wandelement anzuordnenden bzw. festzulegenden Gegenstand, wobei ein Loch (3) gebildet wird, welches die Dämmschicht (2) durchdringt und in das Wandelement (1) reicht, **gekennzeichnet durch** folgende weitere Schritte:
- Einbringen eines stab- bzw. stangenförmigen Verankerungselements (4) in das Loch (3), wobei das Verankerungselement (4) eine Länge zumindest entsprechend der Tiefe des Lochs (3) aufweist,
- Verankern des Verankerungselements (4) in dem im Wandelement (1) befindlichen Teilbereich des Lochs (3),
- Anordnen eines das Verankerungselement (4) übergreifenden, an diesem verriegelbaren und an der Außenseite der Wand bzw. Dämmschicht (2) insbesondere in Anlage bringbaren Abschlußelements (8, 15, 18),
- gegebenenfalls Ablängen eines aus dem Loch vorragenden Teilbereichs des Verankerungselements (4), und
- Festlegen des Befestigungselements (16) an dem Verankerungselement (4) und/oder Abschlußelement (8, 15, 18) zur Festlegung des Gegenstands.

**2.** Verfahren nach Anspruch 1, **dadurch gekennzeichnet, daß** das Abschlußelement (8, 15, 18) über eine Verrastung zueinander komplementärer Profilierungen (9) an der Außenseite des Verankerungselements (4) und an dem das Verankerungselement (4) übergreifenden Teilbereich des Abschlußelements (8, 15, 18) festgelegt bzw. verriegelt wird.

**3.** Verfahren nach Anspruch 1 oder 2, **dadurch gekennzeichnet, daß** das Verankerungselement (4) gegen ein Verdrehen in dem Loch (3) gesichert wird.

**4.** Verfahren nach Anspruch 1, 2 oder 3, **dadurch gekennzeichnet, daß** das Abschlußelement (8, 15, 18) gegenüber einem Verdrehen in dem Loch (3) gesichert wird.

**5.** Verfahren nach einem der Ansprüche 1 bis 4, **dadurch gekennzeichnet, daß** die Festlegung des Befestigungselements (16) durch ein Verriegeln von zueinander komplementären Profilierungen (13) an der von der Wandoberfläche abgewandten Seite bzw. Oberfläche des Abschlußelements (15) und an einer zu dem Abschlußelement (15) gerichteten Seite bzw. Oberfläche des Befestigungselements (16) vorgenommen wird.

**6.** Verfahren nach einem der Ansprüche 1 bis 4, **dadurch gekennzeichnet, daß** das Befestigungselement (16) von einer in eine insbesondere mittig verlaufende Ausnehmung (14) des Verankerungselements (4) einbringbaren Schraube zur Festlegung des Gegenstands gebildet wird.

**7.** System zum Festlegen eines Befestigungselements (16) für einen an einem mit einer Dämmschicht (2) versehenen Wandelement (1) anzuordnenden bzw. festzulegenden Gegenstand, **gekennzeichnet durch**:
- ein stab- bzw. stangenartiges Verankerungselement (4), welches in ein Loch (3) einbringbar ist, welches die Dämmschicht (2) durchdringt und in das Wandelement (1) reicht, wobei das Verankerungselement (4) eine Länge zumindest entsprechend der Tiefe des Lochs (3) aufweist, und
- ein das Verankerungselement (4) übergreifendes, an diesem verriegelbares und an der Außenseite der Wand bzw. Dämmschicht (2) insbesondere in Anlage an dieselbe bringbares Abschlußelement (8, 15, 18),
wobei an dem Verankerungselement (4) und/oder Abschlußelement (8, 15, 18) ein Befestigungselement (16) zur Festlegung des Gegenstands anordenbar bzw. festlegbar ist.

**8.** System nach Anspruch 7, **dadurch gekennzeichnet, daß** das Verankerungselement (4) an seinem aus dem Loch ragenden Ende mit einer Profilierung (9) versehen ist, welche mit einer komplementären Profilierung an dem das Verankerungselement (4) übergreifenden Teilbereich des Abschlußelements (8, 15, 18) für ein Verrasten bzw. Festlegen des Abschlußelements (8, 15, 18) an dem Verankerungselement (4) zusammenwirkt.

**9.** System nach Anspruch 7 und 8, **dadurch gekennzeichnet, daß** das Verankerungselement (4) ablängbar bzw. mit Sollbruchstellen ausgebildet ist.

**10.** System nach einem der Ansprüche 7 bis 9, **dadurch gekennzeichnet, daß** das Verankerungselement (4) mit rippen- bzw. finnenartigen Erhebungen (6, 7) insbesondere in dem die Dämmschicht (2) durchdringenden Teilbereich ausgebildet ist.

**12.** System nach Anspruch 11, **dadurch gekennzeichnet, daß** sich die rippenartigen Erhebungen (6, 7) im wesentlichen in Längsrichtung des Verankerungselements (4) erstrecken.

**13.** System nach Anspruch 11 oder 12, **dadurch gekennzeichnet, daß** wenigstens zwei, insbesondere vier Erhebungen (6, 7) im wesentlichen gleichmäßig über den Umfang des Verankerungselements (4) verteilt vorgesehen sind.

**14.** System nach einem der Ansprüche 7 bis 13, **dadurch gekennzeichnet, daß** das Abschlußelement (8, 15, 18) an seiner zur Dämmschicht (2) gewandten Oberfläche mit wenigstens einer Erhebung (12) zur Ausbildung einer Verdrehsicherung ausgebildet ist.

**15.** System nach einem der Ansprüche 7 bis 14, **dadurch gekennzeichnet, daß** das Verankerungselement (4) an dem zur Wand gewandten, innenliegenden Ende in an sich bekannter Weise an seinem Außenumfang Spreizkörper (5) für ein im wesentlichen selbsttätiges Verankern des Verankerungselements (4) in dem Loch (3) in dem Wandelement (1) aufweist.

**16.** System nach einem der Ansprüche 7 bis 15, **dadurch gekennzeichnet, daß** das Abschlußelement (8, 15, 18) an der von der Dämmschicht (2) abgewandten Oberfläche mit wenigstens einer Profilierung (13) ausgebildet ist, welche mit einer komplementären Profilierung des Befestigungselements (16) zusammenwirkt.

**17.** System nach Anspruch 16, **dadurch gekennzeichnet, daß** das Befestigungselement (16) von einer Halterung bzw. einem Aufnahmeelement einer Halterung für einen insbesondere rohrförmigen Gegenstand gebildet ist.

**18.** System nach einem der Ansprüche 7 bis 17, **dadurch gekennzeichnet, daß** das Abschlußelement (8, 15, 18) und/oder Verankerungselement (4) wenigstens eine Durchbrechung bzw. Öffnung (14) zur Aufnahme wenigstens eines schrauben- bzw. bolzenartigen Befestigungselements zur Festlegung eines Gegenstands aufweist bzw. aufweisen.

**19.** System nach einem der Ansprüche 7 bis 18, **dadurch gekennzeichnet, daß** das Verankerungselement (4) und/oder das Abschlußelement (8, 15, 18) aus einem Kunststoff, insbesondere durch Spritzgießen hergestellt ist bzw. sind.
